# EUROPEAN PATENT SPECIFICATION

(11) **EP 3 518 088 B1**
(45) Date of publication and mention of the grant of the patent: **31.12.2025**
(21) Application number: 16918487.6
(22) Date of filing: 14.10.2016
(51) Int. Cl.: G06F 3/0484, G06F 3/0488

(54) **METHOD FOR ADJUSTING SCREEN-ON DURATION OF TERMINAL, AND TERMINAL**
VERFAHREN ZUR ANPASSUNG DER DAUER EINES EINGESCHALTETEN SCHIRMS EINES ENDGERÄTS SOWIE ENDGERÄT
PROCÉDÉ DE RÉGLAGE DE DURÉE SUR ÉCRAN DE TERMINAL, ET TERMINAL

(43) Date of publication of application: 31.07.2019
(73) Proprietor: Huawei Technologies Co., Ltd., Longgang District Shenzhen, Guangdong 518129 (CN)
(72) Inventor: MAO, Yanyan, Shenzhen Guangdong 518129 (CN)
(74) Representative: Gill Jennings & Every LLP
(86) International application number: PCT/CN2016/102219
(87) International publication number: WO 2018/068327

(56) References cited:
- CN-A- 103 616 947
- CN-A- 104 656 899
- CN-A- 104 850 321
- CN-A- 104 965 667
- CN-A- 105 117 060
- CN-A- 105 183 314
- US-A1- 2004 246 198
- US-A1- 2012 081 322
- US-A1- 2017 285 907
- KANETIK TOOLS: "Wakey: Keep Your Screen Awake", 8 May 2016 (2016-05-08), https://play.google.com/store/apps/details?id=com.doublep.wakey, XP055614449, Retrieved from the Internet <URL:https://web.archive.org/web/20160508022511/https://play.google.com/store/apps/details?id=com.doublep.wakey> [retrieved on 20190821]
- DAVID NIELD: "How to Keep Your Android Device's Screen From Ever Going to Sleep", 2 November 2015 (2015-11-02), XP055614470, Retrieved from the Internet <URL:https://gizmodo.com/how-to-keep-your-android-devices-screen-from-ever-going-1683127286> [retrieved on 20190821]
- ARA WAGONER: "How to keep your screen on in Pok�mon Go without wrecking your battery the rest of the day | Android Central", 20 July 2016 (2016-07-20), XP055614467, Retrieved from the Internet <URL:https://www.androidcentral.com/how-fine-tune-your-settings-pokemon-go-without-trashing-your-battery-rest-day> [retrieved on 20190821]

## Description

### TECHNICAL FIELD

The present invention relates to the field of terminal technologies, and in particular, to a method for adjusting screen-on duration of a terminal and the terminal.

### BACKGROUND

A terminal usually sets screen-on duration, so as to reduce power consumption and avoid an unintentional operation. When a user does not operate the terminal within the specified screen-on duration, the terminal automatically disables a display. In addition, the terminal may decrease brightness of the display within a specified time before automatically disabling the display.

The terminal may provide the user with different lengths of screen-on duration for selection by the user. After the user selects screen-on duration, the terminal automatically dims or disables the display after a corresponding time according to the screen-on duration selected by the user.

Generally, for a purpose of reducing power consumption, the screen-on duration selected by the user is not excessively long. However, in some special cases, the user may require the display to maintain a screen-on state for a relatively long time. For example, when the user reads an electronic book, relatively short screen-on duration cannot meet a requirement of the user for reading. The user needs to frequently perform an operation on the terminal to enable the display to maintain a screen-on state; or needs to first pause a current application program for reading, find, in a setting option, an option for adjusting screen-on duration, reset the screen-on duration in the found option, increase the screen-on duration, and then return to the application program for reading. Consequently, a process of adjusting the screen-on duration by the user when the user currently uses the application program is relatively tedious, and efficiency of modifying the screen-on duration is relatively low, thereby resulting in relatively poor user experience. "https://web.achieve.ovg/web/20160508022511/https://play.google.com/store/apps/ details?id=com.doublep.wakey" discloses an app for adjusting display screen-on time. "https://web.archive.org/web/20181111123437/https://gizmodo.com/how-to-keep-you r-android-devices-screen-from-ever-going-1683127286" describes different apps for adjusting display screen-on time.

### SUMMARY

Embodiments of the present invention provide a method for adjusting screen-on duration of a terminal and the terminal, so as to simplify a process of adjusting the screen-on duration by a user when the user currently uses an application program, and improve efficiency of modifying the screen-on duration.

Specific technical solutions provided in the embodiments of the present invention are as follows:
According to a first aspect, an embodiment of the present invention provides a method for adjusting screen-on duration of a terminal, comprising: detecting, by a terminal, an operation of a user which acts to maintain a screen-on state of a display whilst an application is displayed on the display of the terminal, wherein the operation comprises a quantity of screen touch operations that are not used to perform a task reaches a preset quantity of times within a preset time when the display is in a normal screen-on state, and based on the detecting, displaying, by the terminal on the display, a user interface UI used for adjusting the screen-on duration of the terminal, wherein the UI is configured to: provide an adjustment manner of adjusting the screen-on duration of the terminal, and receive adjustment information used to adjust the screen-on duration that is entered by the user according to the adjustment manner, to prolong the screen-on duration when the application is displayed.

When detecting that a preset condition is met, the terminal provides the user with the adjustment manner of adjusting the screen-on duration, so as to help the user adjust the screen-on duration, so that the user does not need to enter a setting screen of the terminal to adjust the screen-on duration, thereby simplifying a user operation.

Optionally, after detecting the operation of the user for maintaining a screen-on state of the display, the terminal may further automatically adjust the screen-on duration. When automatically adjusting the screen-on duration, the terminal may adjust the screen-on duration to preset screen-on duration; or may prolong the screen-on duration according to a preset delay, that is, adjusted screen-on duration is equal to a sum of screen-on duration obtained before the adjustment and duration by which the screen-on duration is to be delayed; or may determine adjusted screen-on duration according to a type of a task that is being performed by the terminal, so as to meet different requirements of the user for the screen-on duration in different cases.

The terminal determines, according to a frequency at which the user performs input on the terminal to maintain a screen-on state of the display, whether the UI used for adjusting the screen-on duration needs to be displayed to the user or the screen-on duration needs to be automatically adjusted, so as to better meet user requirements.

The user may perform an operation, for example, touch the display, press a hardware button on the terminal, control a voice, or shake the terminal, to trigger brightness restoration after the brightness of the display decreases, or trigger enabling of the display after the display is disabled.

In addition, different preset quantities of times may be set according to different tasks that are being performed by the terminal.

With reference to the first aspect and the first possible implementation of the first aspect, in a second possible implementation of the first aspect, after the terminal displays, on the display, the UI used for adjusting the screen-on duration of the terminal, the terminal obtains the adjustment information used to adjust the screen-on duration that is entered by the user according to the adjustment manner provided by the UI, and adjusts the screen-on duration of the terminal according to the adjustment information.

With reference to the first aspect and the first and the second possible implementations of the first aspect, in a third possible implementation of the first aspect, after the terminal adjusts the screen-on duration of the terminal, if the terminal automatically re-disables the display because the user does not operate the terminal within the adjusted screen-on duration or the user manually disables the display, the terminal restores the screen-on duration to screen-on duration obtained before the adjustment.

Generally, a requirement of the user for prolonging the screen-on duration is temporary. Therefore, after the display is re-disabled, the terminal restores the screen-on duration to the screen-on duration obtained before the adjustment, so as to reduce power consumption of the terminal.

With reference to the first aspect and the first to the third possible implementations of the first aspect, in a fourth possible implementation of the first aspect, the adjustment manner of adjusting the screen-on duration of the terminal that is provided by the UI includes one or a combination of the following manners: an adjustment manner of prolonging the screen-on duration, so that adjusted screen-on duration is equal to a sum of the screen-on duration obtained before the adjustment and adjustment information entered by the user for prolonging the screen-on duration; an adjustment manner of the screen-on duration, so that adjusted screen-on duration is equal to adjustment information that is of the screen-on duration and that is entered by the user; or an adjustment manner of maintaining a screen-on state, so that the terminal maintains a screen-on state before the display is manually disabled. The foregoing possible implementations can meet different requirements of the user for adjusting the screen-on duration in different cases.

With reference to the first aspect and the first to the fourth possible implementations of the first aspect, in a fifth possible implementation of the first aspect, the adjustment manner of adjusting the screen-on duration of the terminal that is provided by the UI may be presented to the user in the following forms: The UI includes a timeline, where the timeline includes a plurality of pieces of time information used by the user to select screen-on duration or prolong the screen-on duration; the UI includes a plurality of time information options that are used by the user to select screen-on duration or prolong the screen-on duration; or the UI includes a time input box that is used by the user to enter duration information of screen-on duration or duration information of duration by which the screen-on duration is to be prolonged. The terminal may provide, in a plurality of forms, the user with a plurality of adjustment manners of adjusting the screen-on duration, so as to meet different requirements of the user in different application scenarios.

With reference to the first aspect, in a sixth possible implementation of the first aspect, the UI used for adjusting the screen-on duration may be a setting screen for setting the screen-on duration in a system.

With reference to the first aspect and the first to the sixth possible implementations of the first aspect, in a seventh possible implementation of the first aspect, the terminal may first determine whether the terminal is currently running an application program; and if the terminal is running an application program, the terminal continues to detect whether the operation of the user for maintaining a screen-on state of the display is received, or if the terminal does not run any application program, the procedure ends.

Further, it may be determined whether the terminal runs a same application program when a quantity of times of user input reaches the preset quantity of times. If the quantity of times of user input reaches the preset quantity of times, but the user switches a currently displayed application program in a period of the user input, the terminal cannot determine whether the user operation is intended to maintain a screen-on state of the display. If the terminal runs the same application program, it may be considered that the user operation is to maintain a screen-on state of the display.

According to a second aspect, an embodiment of the present invention provides a terminal, including a display, a processor, and a memory and a detector that are connected to the processor, where the memory pre-stores a computer program; and the processor invokes the computer program stored in the memory to perform the following step: detect, by the detector, an operation of a user which acts to maintain a screen-on state of the display whilst an application is displayed on the display of the terminal, wherein the operation comprises a quantity of screen touch operations that are not used to perform a task reaches a preset quantity of times within a preset time when the display is in a normal screen-on state, and based on the detecting, display, by using the display, a UI used for adjusting screen-on duration of the display, where the UI is configured to: provide an adjustment manner of adjusting the screen-on duration of the display, and receive adjustment information used to adjust the screen-on duration that is entered by the user according to the adjustment manner, to prolong the screen-on duration when the application is displayed.

Optionally, after the detector detects the operation of the user for maintaining a screen-on state of the display, the processor may further automatically adjust the screen-on duration.

With reference to the second aspect and the first possible implementation of the second aspect, in a second possible implementation of the second aspect, the processor is further configured to: after the user enters, according to the adjustment manner, the adjustment information used to adjust the screen-on duration, adjust the screen-on duration of the display according to the adjustment information.

With reference to the second possible implementation of the second aspect, in a third possible implementation of the second aspect, after adjusting the screen-on duration of the display, the processor is further configured to: after the display is disabled, restore the screen-on duration of the display to screen-on duration obtained before the adjustment.

With reference to the second aspect and the first to the third possible implementations of the second aspect, in a fourth possible implementation of the second aspect, the adjustment manner of adjusting the screen-on duration of the terminal that is provided by the UI includes one or a combination of the following manners: an adjustment manner of prolonging the screen-on duration, so that adjusted screen-on duration is equal to a sum of the screen-on duration obtained before the adjustment and adjustment information entered by the user for prolonging the screen-on duration; or an adjustment manner of the screen-on duration, so that adjusted screen-on duration is equal to adjustment information that is of the screen-on duration and that is entered by the user; or an adjustment manner of maintaining a screen-on state, so that the terminal maintains a screen-on state before the display is manually disabled.

With reference to the second aspect and the first to the fourth possible implementations of the second aspect, in a fifth possible implementation of the second aspect, the adjustment manner of adjusting the screen-on duration of the terminal that is provided by the UI is presented in one of the following forms: The UI includes a timeline, including a plurality of pieces of time information used by the user to select screen-on duration or prolong the screen-on duration; or the UI includes a plurality of time information options that are used by the user to select screen-on duration or prolong the screen-on duration; or the UI includes a time input box that is used by the user to enter duration information of screen-on duration or duration information of duration by which the screen-on duration is to be prolonged.

With reference to the second aspect, in a sixth possible implementation of the second aspect, the UI used for adjusting the screen-on duration may be a setting screen for setting the screen-on duration in a system.

With reference to the second aspect and the first to the sixth possible implementations of the second aspect, in a seventh possible implementation of the second aspect, the processor is specifically configured to: when the terminal is currently running an application program, detect, by using the detector, whether the operation of the user for maintaining a screen-on state of the display is received.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic structural diagram of a terminal that can be applied to an embodiment of the present invention;
FIG. 2 is a schematic flowchart of a method for adjusting screen-on duration of a terminal according to an embodiment of the present invention; and
FIG. 3 (a) to FIG. 3 (d) are schematic diagrams of UIs for providing adjustment manners of adjusting screen-on duration of a terminal according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention.

When a terminal does not receive a user operation within specified screen-on duration, the terminal automatically disables a display, so as to reduce power consumption and avoid an unintentional operation. However, in some cases, the specified screen-on duration probably cannot meet a requirement of a user. For example, when there are plenty of words displayed on a page browsed by the user, and the user cannot finish reading within the preset screen-on duration, the screen-on duration of the display needs to be prolonged. For another example, when the user sees an inference question of interest on a web page or in an application program, and needs to spend time thinking and reasoning, the screen-on duration of the display needs to be prolonged, so that the user can obtain information for reasoning from the inference question when required.

When the specified screen-on duration cannot meet a requirement of the user, the user may touch the display for several times, so that the display maintains a screen-on state for a long time, or the user may first exit from a current application, enter a setting screen to set the screen-on duration of the terminal to a relatively long time, and then return to an application programming screen. Neither manner is convenient for the user.

To resolve the foregoing problem, the embodiments of the present invention provide a method for adjusting screen-on duration of a terminal. The method can simplify a process of adjusting the screen-on duration by a user when the user currently uses an application program, and improve efficiency of modifying the screen-on duration.

The terminal in the embodiments of the present invention may include a mobile phone, a tablet computer, a personal digital assistant (Personal Digital Assistant, PDA), a point of sale (Point of Sales, POS), an in-vehicle computer, and the like.

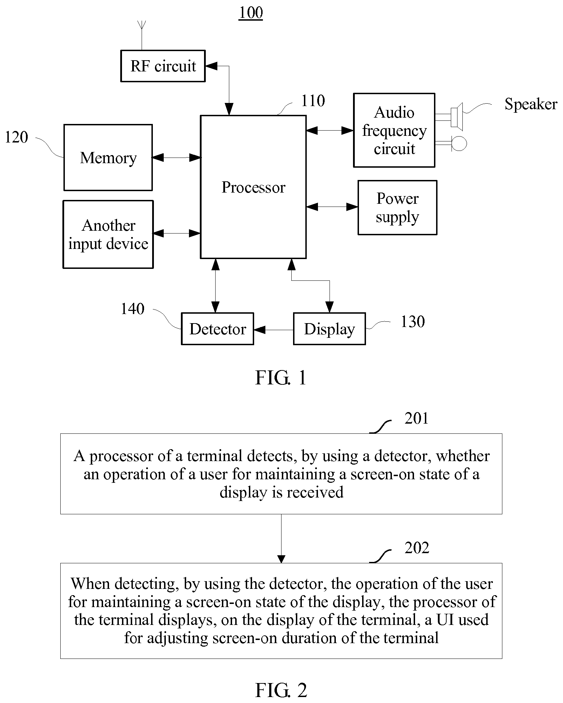

FIG. 1 shows a block diagram of a partial structure of a terminal 100 according to an embodiment of the present invention. As shown in FIG. 1, the terminal 100 includes a processor 110, and a memory 120, a display 130, and a detector 140 that are connected to the processor 110. Optionally, the terminal 100 may further include an audio frequency circuit, a speaker, a microphone, another input device, a radio frequency (Radio Frequency, RF) circuit, and the like. In addition, the terminal 100 includes a power supply that supplies power to the terminal 100.

Persons skilled in the art may understand that a structure of the terminal shown in FIG. 1 constitutes no limitation on the terminal, and may include more or fewer parts than those shown in the figure, or combine some parts, or split some parts, or have different part arrangements.

The following describes the composition parts of the terminal 100 in detail with reference to FIG. 1.

The memory 120 may be configured to store a computer program and data, and the processor 110 performs various function applications of the terminal 100 and data processing by running the computer program pre-stored in the memory 120. The memory 120 may mainly include a program storage area and a data storage area. The program storage area may store an operating system (such as an Android operating system or an iOS operating system) and an application program required by at least one function; and the data storage area may store data created according to use of the terminal 100, and the like.

The display 130 may be configured to display information entered by a user, information provided for the user, and various menus of the terminal 100.

The detector 140 may collect a touch or non-touch operation (for example, an operation performed by the user on the detector or near the detector by using any proper object or accessory, such as a finger or a stylus, or a motion sensing operation; the operation includes operation types such as a single-point control operation and a multipoint control operation) of the user, and drive a corresponding connection apparatus according to a preset program.

The RF circuit may be configured to: receive and send a signal in an information receiving/transmitting process or a call process. Generally, the RF circuit includes but is not limited to an antenna, at least one amplifier, a transceiver, a coupler, a low noise amplifier (Low Noise Amplifier, LNA), a duplexer, and the like. In addition, the RF circuit may communicate with a network and another device through wireless communication. The wireless communication may use any communications standard or protocol, including but not limited to Global System for Mobile Communications (Global System for Mobile Communications, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, a short message service (Short Message Service, SMS), and the like.

The audio frequency circuit, the speaker, and the microphone may provide an audio screen between the user and the terminal 100. The audio frequency circuit may transmit a signal obtained after conversion of received audio data to the speaker, and the speaker converts the signal into a voice signal for output. In addition, the microphone converts a collected voice signal into a signal, and the audio frequency circuit receives the signal, converts the signal into audio data, and then outputs the audio data to the RF circuit, so as to send the audio data to, for example, another terminal, or output the audio data to the memory 120 for further processing.

The processor 110 is a control center of the terminal 100, and is connected to all parts of the entire terminal by using various interfaces and lines, and performs various functions of the terminal 100 and data processing by running or executing the computer program and/or a module that are/is stored in the memory 120 and invoking the data stored in the memory 120, so as to perform overall monitoring on the terminal.

Optionally, the processor 110 may include one or more processing units. Preferably, the processor 110 may integrate an application processor and a modem processor. The application processor mainly processes an operating system, a user interface, an application program, and the like, and the modem processor mainly processes wireless communication. It may be understood that the modem processor may be not integrated into the processor 110.

The terminal 100 further includes the power supply (for example, a battery) that supplies power to each part. Preferably, the power supply may be logically connected to the processor 110 by using a power management system, so as to manage functions such as charging, discharging, and power consumption by using the power management system.

Although not shown in the figure, the terminal 100 may further include a camera, a Bluetooth module, and the like, and details are not described herein.

The following describes the method provided in the embodiments of the present invention.

Referring to FIG. 2, FIG. 2 is a schematic flowchart of a method for adjusting screen-on duration of a terminal according to an embodiment of the present invention. As shown in the figure, the method includes the following steps:
Step 201: A processor of a terminal detects, by using a detector, whether an operation of a user for maintaining a screen-on state of a display is received.
Step 202: When detecting, by using the detector, the operation of the user for maintaining a screen-on state of the display, the processor of the terminal displays, on the display of the terminal, a user interface (User Interface, UI) for adjusting screen-on duration of the terminal, where the UI is configured to: provide an adjustment manner of adjusting the screen-on duration of the terminal, and receive adjustment information used to adjust the screen-on duration that is entered by the user according to the provided adjustment manner.

Optionally, when detecting the operation of the user for maintaining a screen-on state of the display, the processor may further automatically adjust the screen-on duration, so as to simplify a user operation.

When detecting the operation of the user for maintaining a screen-on state of the display, the terminal may automatically adjust the screen-on duration, or may display the UI used for adjusting the screen-on duration, so that the user chooses whether to adjust the screen-on duration and selects adjusted screen-on duration. In this way, the user does not need to enter a setting screen of the terminal to adjust the screen-on duration, thereby simplifying a user operation and improving user experience.

The user usually expects the display to maintain a screen-on state for a relatively long time after enabling an application program of the terminal to perform a task, and the display usually does not need to maintain a screen-on state for a relatively long time if the user does not enable any application program. Based on the foregoing reason, optionally, when performing step 201, the processor of the terminal may first determine whether the terminal is currently running an application program; and if the terminal is running an application program, the processor continues to detect, by using the detector, whether the operation of the user for maintaining a screen-on state of the display is received, or if the terminal does not run any application program, the procedure may end.

After receiving the operation of the user for maintaining a screen-on state of the display, the processor automatically adjusts the screen-on duration. The processor of the terminal may adjust the screen-on duration to preset screen-on duration; or may prolong the screen-on duration according to a preset delay, that is, adjusted screen-on duration is equal to a sum of screen-on duration obtained before the adjustment and duration by which the screen-on duration is to be delayed; or may determine corresponding screen-on duration according to a task that is being performed. For example, screen-on duration obtained after automatic adjustment by the processor when the user browses a web page by using the terminal and triggers adjustment of the screen-on duration may be different from that obtained when the user plays a game by using the terminal and triggers adjustment of the screen-on duration.

After receiving the operation of the user for maintaining a screen-on state of the display, the processor displays, on the display, the UI used for adjusting the screen-on duration. If the user enters, on the UI, the adjustment information used to adjust the screen-on duration, the processor of the terminal adjusts the screen-on duration of the display according to the adjustment information entered by the user.

Optionally, whether the operation of the user for maintaining a screen-on state of the display is received may be determined by determining whether a quantity of times of input that is capable of maintaining a screen-on state and that is received within a preset time reaches a preset quantity of times.

For example, when one of the following conditions is met, it may be determined that the operation of the user for maintaining a screen-on state of the display is received.

Condition 1: After brightness of the display of the terminal decreases because the terminal is not operated, a quantity of times of triggering brightness restoration within a preset time is greater than or equal to a first preset quantity of times.

In some embodiments, the terminal is configured to decrease the brightness of the display within a specified time before automatically disabling the display. For example, the screen-on duration of the terminal is set to 1 minute, and the brightness of the display is decreased within 5 seconds before the display is automatically disabled, that is, when a time period in which the user does not operate the terminal reaches 55 seconds, the brightness of the display is decreased. If the user still does not operate the terminal within the 5 seconds, the processor of the terminal disables the display; or if the user touches the display or performs another operation on the terminal within the 5 seconds, the processor may be triggered to control the display to restore the brightness.

In the foregoing case, after the brightness of the display is decreased, if the quantity of times the user touches the display or performs another operation to trigger the display to restore the brightness is greater than or equal to the first preset quantity of times, it may be considered that the user needs to adjust the screen-on duration.

Condition 2: After the processor of the terminal disables the display, a quantity of times the user enables the display within a preset time is greater than or equal to a second preset quantity of times.

In some other embodiments, there is no process of decreasing the brightness of the display before the processor of the terminal disables the display. In this case, the processor of the terminal may determine, according to the quantity of times of enabling the display because of a user operation after the display is disabled, whether the user needs to adjust the screen-on duration.

Further, a time of enabling the display by the user may be limited. For example, if the user enables the display within 5s immediately after the display is disabled, it is considered that the foregoing operation is valid; or if the user re-enables the display after a relatively long time after the display is disabled, it is considered that the operation is invalid.

Condition 3: When the display is in a normal screen-on state, a quantity of screen touch operations that are not used to perform a task is greater than or equal to a third preset quantity of times within a preset time.

In actual application, sometimes the user performs a screen touch operation to prevent the display from being disabled. The screen touch operation is not used to perform a task, but is merely used to prevent the display from being disabled because the display is not operated for a long time. When a quantity of these screen touch operations reaches a preset quantity of times, it may be considered that the user expects the display to maintain a screen-on state.

Condition 4: A sum of quantities of times of input in the foregoing cases is greater than or equal to a fourth preset quantity of times within a preset time.

The first preset quantity of times, the second preset quantity of times, the third preset quantity of times, and the fourth preset quantity of times may be the same or different. In addition, different preset quantities of times may be set according to different tasks that are being performed by the terminal. For example, when the user plays a game by using the terminal, a preset quantity of times may be set to only one, and when the user browses a web page by using the terminal, a preset quantity of times may be set to three. For another example, different preset quantities of times may be set according to different kinds of content, such as a static text or picture or motion graphics, that are currently displayed on the display. For another example, a preset quantity of times may be determined according to network traffic currently used by the terminal. If the terminal currently uses a large amount of network traffic, generally the user is using the terminal, and is more likely to expect the display to maintain a screen-on state, and a smaller preset quantity of times may be set; or if the terminal currently uses a small amount of network traffic, a larger preset quantity of times may be set.

Further, when it is determined whether the quantity of times of input to maintain a screen-on state reaches the preset quantity of times, it may be further determined whether application programs that are displayed by the terminal during a plurality of user operations are the same. For example, although a quantity of user operations reaches the preset quantity of times, the user switches a currently displayed application program in a period of the user operations, and in this case, it cannot be determined whether the user operation is intended to maintain a screen-on state of the display. Therefore, a condition for adjusting the screen-on duration may include the quantity of user operations and that application programs displayed by the terminal are a same application program.

A user operation of triggering brightness restoration after the brightness of the display is decreased or a user operation of triggering enabling of the display after the display is disabled may be an operation, such as touching the display, pressing a hardware button on the terminal, controlling a voice, or shaking the terminal. It should be noted that for different terminals, different settings, and different application programs that are running on the terminal, user operations of triggering brightness restoration after the brightness of the display is decreased may be different, or user operations of triggering enabling of the display after the display is disabled may be different. That is, preset quantities of user operations may be different. This is not limited in the present invention.

The foregoing operation of the user for maintaining a screen-on state of the display may not only be a preset quantity of times of input, but also be an operation gesture preset in another possible implementation. When detecting that the user uses the preset gesture as input, the terminal may trigger the method for adjusting screen-on duration provided in this embodiment of the present invention to adjust the screen-on duration of the display. For example, the operation gesture may be drawing a circle or another specific pattern on a touchscreen, may be continuously tapping a touchscreen, or may be input such as touching and holding a touchscreen. For a pressure touchscreen, the operation gesture may also be inputting specific pressure or a pressure combination. Similarly, the screen-on duration of the display may be further directly adjusted in an input manner, such as pressing or sliding on a fingerprint sensor.

Further, in step 202, the UI used for adjusting the screen-on duration of the terminal may provide the user with one or a combination of the following adjustment manners:

### Manner 1: an adjustment manner of prolonging the screen-on duration

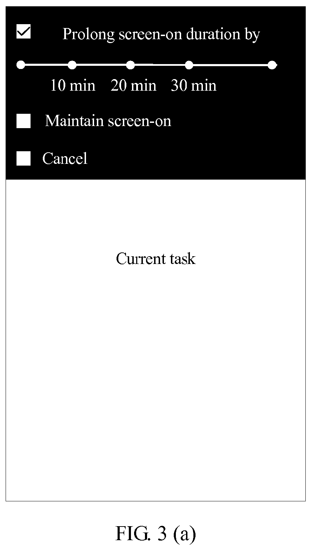

The UI may provide the user with an adjustment solution for prolonging the screen-on duration. After the user determines duration by which the screen-on duration is to be prolonged, the processor of the terminal sets the screen-on duration to a sum of screen-on duration obtained before the adjustment and the duration, determined by the user, by which the screen-on duration is to be prolonged. For example, preset screen-on duration is 1 minute. After determining that the user needs to adjust the screen-on duration, the terminal displays the UI used for adjusting the screen-on duration, so that the user chooses whether to prolong the screen-on duration and selects a time by which the screen-on duration is to be prolonged. The UI may be shown in FIG. 3 (a). If the user determines to prolong the screen-on duration by 10 minutes, the adjusted screen-on duration is 11 minutes.

### Manner 2: an adjustment manner of the screen-on duration

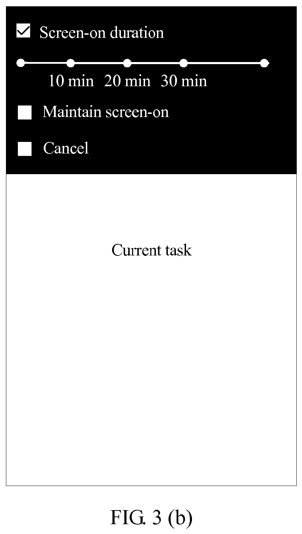

The UI may further provide the user with a solution for adjusting the screen-on duration. That is, after the user determines screen-on duration, the terminal sets the screen-on duration to the screen-on duration determined by the user. For example, preset screen-on duration is 1 minute. After determining that the user needs to adjust the screen-on duration, the terminal displays the UI used for adjusting the screen-on duration, so that the user chooses whether to adjust the screen-on duration and selects adjusted screen-on duration. The UI may be shown in FIG. 3 (b). If the user determines that the adjusted screen-on duration is 10 minutes, the adjusted screen-on duration is 10 minutes.

### Manner 3: an adjustment manner of maintaining the screen-on duration

The UI may further provide the user with an adjustment solution for maintaining a screen-on state of the terminal until the user manually disables the display, for example, "maintaining a screen-on state" shown in FIG. 3 (a) to FIG. 3 (d).

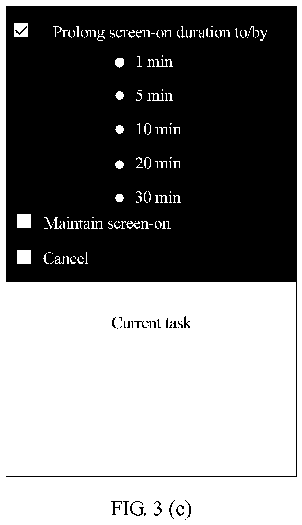

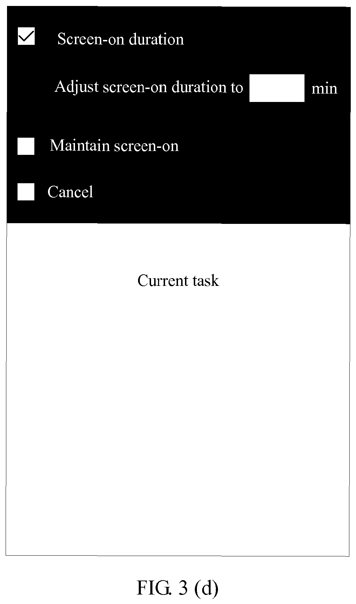

Specifically, the solution for adjusting the screen-on duration that is provided by the UI used for adjusting the screen-on duration may be presented to the user in the following forms:
Form 1: The UI includes a timeline, including time information used by the user to select screen-on duration or prolong the screen-on duration. As shown in FIG. 3 (a) and FIG. 3 (b), the user may drag a slider to a time node on the timeline, so as to select corresponding screen-on duration or prolong the screen-on duration.
Form 2: The UI includes a plurality of time information options that are used by the user to select screen-on duration or prolong the screen-on duration. For example, as shown in FIG. 3 (c), the UI may provide the user with time options, such as 5 minutes, 10 minutes, 15 minutes, and 30 minutes.
Form 3: As shown in FIG. 3 (d), the UI may further include a time input box that is used by the user to directly enter time information of screen-on duration or time information of duration by which the screen-on duration is to be prolonged.

The UI may further include only an option for determining to maintain a screen-on state and does not include duration for selection, so that the user can quickly choose to maintain a screen-on state. The UI may be displayed for selection by the user immediately when the screen dims. When the screen dims, if the user does not focus on content displayed on the screen, the displayed UI causes no trouble to the user; or if the user focuses on content displayed on the screen, the user may directly perform selection according to a prompt of the UI. If the user does not select the UI and lets the screen of the terminal become black, the UI may not be displayed in next screen-on, so as to avoid troubling the user. The UI may be further automatically displayed after a preset time instead of being displayed when the screen dims. After the user performs, for many times, a screen-on operation shortly after the screen becomes black, the terminal determines that the user expects to prolong the screen-on duration, and the terminal may display the UI on a lock screen screen after the screen is lit up, or may display the UI after unlocking, or may directly display content that is displayed before the screen becomes black and display the UI.

In another possible implementation, after the operation of the user for maintaining a screen-on state of the display is detected, the displayed UI used for adjusting the screen-on duration may also be a setting screen for adjusting the screen-on duration in a system.

Further, the processor of the terminal adjusts the screen-on duration of the display. If the processor does not receive a user operation instruction within the adjusted screen-on duration, the processor disables the display, or the user manually disables the display. The processor may further restore the screen-on duration of the display to the screen-on duration obtained before the adjustment. Generally, long screen-on duration of the display that is needed by the user is merely a requirement in a special case, and is not a common requirement. For example, after completing an inference question, the user no longer expects a mobile phone to maintain a screen-on state when the user does not operate the mobile phone. Therefore, the terminal may restore the screen-on duration to the screen-on duration obtained before the adjustment, so as to reduce power consumption of the terminal.

Based on a same technical conception, an embodiment of the present invention further provides a terminal. The terminal may implement the foregoing method embodiment.

A schematic structural diagram of the terminal provided in this embodiment of the present invention may be shown in FIG. 1.

The memory 120 pre-stores a computer program.

The processor 110 is configured to invoke the computer program pre-stored in the memory 120 to perform the following step: if the detector 140 detects an operation of a user for maintaining a screen-on state of a display, display, by using the display 130, a UI used for adjusting screen-on duration, where the UI is configured to: provide an adjustment manner of adjusting the screen-on duration of the display 130, and receive adjustment information used to adjust the screen-on duration that is entered by the user.

Optionally, after the detector 140 detects the operation of the user for maintaining a screen-on state of the display, the processor 120 may further automatically adjust the screen-on duration.

If the user enters, on the UI, the adjustment information used to adjust the screen-on duration, the processor 110 may adjust the screen-on duration of the display 130 according to the adjustment information entered by the user.

After the screen-on duration is adjusted, if the display 130 is re-disabled, the processor 110 may further restore the screen-on duration of the display 130 to screen-on duration obtained before the adjustment.

When detecting, by using the detector 140, the operation for maintaining a screen-on state of the display, the processor 110 may first determine whether the processor 110 is currently running an application program; and if the processor 110 is running an application program, the processor 110 detects, by using the detector 140, whether the operation for maintaining a screen-on state of the display is received, or if the processor 110 does not run any application program, the procedure ends.

The foregoing operation for maintaining a screen-on state of the display may be: A quantity of times of input to maintain a screen-on state reaches a preset quantity of times within a preset time. For example, when one of the following conditions is met, it may be determined that the operation of the user for maintaining a screen-on state of the display is received.

Condition 1: After brightness of the display 130 decreases because the terminal 100 is not operated, a quantity of times of triggering brightness restoration within a preset time reaches a first preset quantity of times.

Condition 2: After the processor 110 disables the display 130, a quantity of times of enabling the display 130 within a preset time reaches a second preset quantity of times.

Condition 3: When the display is in a normal screen-on state, a quantity of screen touch operations that are not used to perform a task is greater than or equal to a third preset quantity of times within a preset time.

Condition 4: A sum of quantities of times of input in the foregoing cases is greater than or equal to a fourth preset quantity of times within a preset time.

Further, when it is determined whether the quantity of times of input to maintain a screen-on state reaches the preset quantity of times, it may be further determined whether application programs that are displayed by the terminal during a plurality of times of user operations are the same. If the terminal runs the same application program, and the quantity of times of input to maintain a screen-on state reaches the preset quantity of times, the screen-on duration is adjusted or the UI used for adjusting the screen-on duration is displayed.

Optionally, the foregoing operation of the user for maintaining a screen-on state of the display may not only be a preset quantity of times of input, but also be an operation gesture preset in another possible implementation.

The adjustment manner of adjusting the screen-on duration that is provided by the UI used for adjusting the screen-on duration may include one or a combination of the following manners:
Manner 1: an adjustment manner of prolonging the screen-on duration, so that adjusted screen-on duration is equal to a sum of the screen-on duration obtained before the adjustment and adjustment information entered by the user for prolonging the screen-on duration.
Manner 2: an adjustment manner of the screen-on duration, so that adjusted screen-on duration is equal to adjustment information that is of the screen-on duration and that is entered by the user.
Manner 3: an adjustment manner of maintaining a screen-on state, so that the terminal maintains a screen-on state before the user manually disables the display.

The manner of adjusting the screen-on duration that is provided by the UI used for adjusting the screen-on duration may be presented to the user in the following forms:
Form 1: The UI includes a timeline, including time information used by the user to select screen-on duration or prolong the screen-on duration.
Form 2: The UI includes a plurality of time information options that are used by the user to select screen-on duration or prolong the screen-on duration.
Form 3: The UI may further include a time input box that is used by the user to directly enter time information of screen-on duration or time information of duration by which the screen-on duration is to be prolonged.

Optionally, after the operation of the user for maintaining a screen-on state of the display is detected, the displayed UI used for adjusting the screen-on duration may also be a setting screen for adjusting the screen-on duration in a system.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

## Claims

1. A method for adjusting screen-on duration of a terminal, comprising:
detecting (201), by a terminal, an operation of a user which acts to maintain a screen-on state of a display whilst an application is displayed on the display of the terminal, wherein the operation comprises a quantity of screen touch operations that are not used to perform a task reaches a preset quantity of times within a preset time when the display is in a normal screen-on state, and
based on the detecting, displaying (202), by the terminal on the display, a user interface UI used for adjusting the screen-on duration of the terminal, wherein the UI is configured to: provide an adjustment manner of adjusting the screen-on duration of the terminal, and receive adjustment information used to adjust the screen-on duration that is entered by the user according to the adjustment manner, to prolong the screen-on duration when the application is displayed.

2. The method according to claim 1, wherein after the displaying, by the terminal on the display, a UI used for adjusting the screen-on duration of the terminal, the method further comprises:
adjusting, by the terminal, the screen-on duration of the terminal according to the adjustment information used to adjust the screen-on duration that is entered by the user on the displayed UI according to the adjustment manner.

3. The method according to claim 1 or 2, wherein after the adjusting the screen-on duration of the terminal, the method further comprises:
after disabling the display, restoring, by the terminal, the screen-on duration of the terminal to screen-on duration obtained before the adjustment.

4. The method according to any one of claims 1 to 3, wherein the adjustment manner of adjusting the screen-on duration of the terminal that is provided by the UI comprises one or a combination of the following manners:
an adjustment manner of prolonging the screen-on duration, so that adjusted screen-on duration is equal to a sum of the screen-on duration obtained before the adjustment and adjustment information entered by the user for prolonging the screen-on duration;
an adjustment manner of the screen-on duration, so that adjusted screen-on duration is equal to adjustment information that is of the screen-on duration and that is entered by the user; or
an adjustment manner of maintaining a screen-on state, so that the terminal maintains a screen-on state before the display is manually disabled.

5. The method according to any one of claims 1 to 4, wherein the adjustment manner of adjusting the screen-on duration of the terminal that is provided by the UI is presented in one of the following forms:
the UI comprises a timeline, comprising a plurality of pieces of time information used by the user to select screen-on duration or prolong the screen-on duration;
the UI comprises a plurality of time information options that are used by the user to select screen-on duration or prolong the screen-on duration; or
the UI comprises a time input box that is used by the user to enter duration information of screen-on duration or duration information of duration by which the screen-on duration is to be prolonged.

6. The method according to claim 1, wherein the UI is a setting screen for setting the screen-on duration in a system.

7. The method according to any one of claims 1 to 6, wherein the detecting, by the terminal, an operation of a user for maintaining a screen-on state of a display comprises:
when an application is displayed on the display of the terminal, detecting, by the terminal, the operation of the user for maintaining a screen-on state of the display.

8. A terminal (101), comprising a display (130), a processor (110), and a memory (120) and a detector (140) that are connected to the processor, wherein
the memory pre-stores a computer program; and
the processor is configured to invoke the computer program pre-stored in the memory to: detect, by the detector, an operation of a user which acts to maintain a screen-on state of the display whilst an application is displayed on the display of the terminal, wherein the operation comprises a quantity of screen touch operations that are not used to perform a task reaches a preset quantity of times within a preset time when the display is in a normal screen-on state, and based on the detecting, display, by using the display, a user interface UI used for adjusting screen-on duration of the display, wherein the UI is configured to: provide an adjustment manner of adjusting the screen-on duration of the display, and receive adjustment information used to adjust the screen-on duration that is entered by the user according to the adjustment manner, to prolong the screen-on duration when the application is displayed.

9. The terminal according to claim 8, wherein the processor is further configured to:
after the user enters, according to the adjustment manner, the adjustment information used to adjust the screen-on duration, adjust the screen-on duration of the display according to the adjustment information.

10. The terminal according to claim 8 or 9, wherein after adjusting the screen-on duration of the display, the processor is further configured to:
after the display is disabled, restore the screen-on duration of the display to screen-on duration obtained before the adjustment.

11. The terminal according to any one of claims 8 to 10, wherein the adjustment manner of adjusting the screen-on duration of the terminal that is provided by the UI comprises one or a combination of the following manners:
an adjustment manner of prolonging the screen-on duration, so that adjusted screen-on duration is equal to a sum of the screen-on duration obtained before the adjustment and adjustment information entered by the user for prolonging the screen-on duration;
an adjustment manner of the screen-on duration, so that adjusted screen-on duration is equal to adjustment information that is of the screen-on duration and that is entered by the user; or
an adjustment manner of maintaining a screen-on state, so that the terminal maintains a screen-on state before the display is manually disabled.

12. The terminal according to any one of claims 8 to 11, wherein the adjustment manner of adjusting the screen-on duration of the terminal that is provided by the UI is presented in one of the following forms:
the UI comprises a timeline, comprising a plurality of pieces of time information used by the user to select screen-on duration or prolong the screen-on duration;
the UI comprises a plurality of time information options that are used by the user to select screen-on duration or prolong the screen-on duration; or
the UI comprises a time input box that is used by the user to enter duration information of screen-on duration or duration information of duration by which the screen-on duration is to be prolonged.

13. The terminal according to claim 8, wherein the UI is a setting screen for setting the screen-on duration in a system.

## Patentansprüche

1. Verfahren zum Anpassen der Dauer eines eingeschalteten Schirms eines Endgeräts, umfassend:
Detektieren (201) eines Vorgangs eines Benutzers, der dazu dient, einen Zustand eines eingeschalteten Schirms einer Anzeige aufrechtzuerhalten, während eine Anwendung auf der Anzeige eines Endgeräts angezeigt wird, durch das Endgerät, wobei der Vorgang umfasst, dass eine Menge von Schirmberührungsvorgängen, die nicht verwendet werden, um eine Aufgabe durchzuführen, eine voreingestellte Menge von Malen innerhalb einer voreingestellten Zeit erreicht, wenn die Anzeige in einem normalen eingeschalteten Zustand ist, und
basierend auf dem Detektieren Anzeigen (202) einer Benutzerschnittstelle (UI), die zum Anpassen der Dauer eines eingeschalteten Schirms des Endgeräts verwendet wird, durch das Endgerät auf der Anzeige, wobei die UI zu Folgendem konfiguriert ist: Bereitstellen einer Anpassungsart zum Anpassen der Dauer eines eingeschalteten Schirms des Endgeräts und Empfangen von Anpassungsinformationen, die verwendet werde, um der Dauer eines eingeschalteten Schirms anzupassen, die durch den Benutzer gemäß der Anpassungsart eingegeben werden, um die Dauer eines eingeschalteten Schirms zu verlängern, wenn die Anwendung angezeigt wird.

2. Verfahren nach Anspruch 1, wobei das Verfahren nach dem Anzeigen einer UI zum Anpassen der Dauer eines eingeschalteten Schirms des Endgeräts durch das Endgerät auf der Anzeige ferner Folgendes umfasst:
Anpassen der Dauer des eingeschalteten Bildschirms des Endgeräts durch das Endgerät entsprechend der Anpassungsinformationen, die verwendet werden, um die Dauer des eingeschalteten Bildschirms anzupassen, die vom Benutzer auf der angezeigten UI entsprechend der Anpassungsart eingegeben wird.

3. Verfahren nach Anspruch 1 oder 2, wobei das Verfahren nach dem Anpassen der Dauer eines eingeschalteten Schirms des Endgeräts ferner Folgendes umfasst:
nach dem Deaktivieren der Anzeige Zurücksetzen der Dauer eines eingeschalteten Schirms des Endgeräts auf die vor der Anpassung erlangte Dauer des eingeschalteten Schirms durch das Endgerät.

4. Verfahren nach einem der Ansprüche 1 bis 3, wobei die Anpassungsart zum Anpassen der Dauer eines eingeschalteten Schirms des Endgeräts, die durch die UI bereitgestellt wird, eine oder eine Kombination von folgenden Arten umfasst:
eine Anpassungsart zum Verlängern der Dauer eines eingeschalteten Schirms, sodass die angepasste Dauer eines eingeschalteten Schirms gleich der Summe aus der Dauer eines eingeschalteten Schirms, die vor der Anpassung erlangt wird, und den Anpassungsinformationen ist, die durch den Benutzer zum Verlängern der Dauer des eingeschalteten Schirms eingegeben wird;
eine Anpassungsart der Dauer eines eingeschalteten Schirms, sodass die angepasste Dauer eines eingeschalteten Schirms gleich der durch den Benutzer eingegebenen Anpassungsinformationen für die Dauer eines eingeschalteten Schirms ist; oder
eine Anpassungsart zum Aufrechterhalten eines eingeschalteten Schirms, sodass das Endgerät den Zustand eines eingeschalteten Schirms aufrechterhält, bevor die Anzeige manuell deaktiviert wird.

5. Verfahren nach einem der Ansprüche 1 bis 4, wobei die Anpassungsart zum Anpassen der Dauer eines eingeschalteten Schirms des Endgeräts, die durch die UI bereitgestellt wird, in einer der folgenden Formen dargestellt wird:
die UI umfasst eine Zeitleiste, die eine Vielzahl von Zeitinformationen umfasst, die durch den Benutzer verwendet wird, um die Dauer eines eingeschalteten Schirms auszuwählen oder die Dauer des eingeschalteten Schirms zu verlängern;
die UI umfasst eine Vielzahl von Zeitinformationsoptionen, die durch den Benutzer verwendet wird, um die Dauer eines eingeschalteten Schirms auszuwählen oder die Dauer des eingeschalteten Schirms zu verlängern; oder
die UI umfasst ein Zeiteingabefeld, in das der Benutzer Informationen über die Dauer eines eingeschalteten Schirms oder Informationen über die Dauer, um die die Dauer des eingeschalteten Schirms verlängert werden soll, eingeben kann.

6. Verfahren nach Anspruch 1, wobei die UI ein Einstellbildschirm zum Einstellen der Dauer eines eingeschalteten Schirms in einem System ist.

7. Verfahren nach einem der Ansprüche 1 bis 6, wobei das Detektieren eines Vorgangs eines Benutzers zum Aufrechterhalten eines eingeschalteten Schirms einer Anzeige durch das Endgerät Folgendes umfasst:
wenn eine Anwendung auf der Anzeige des Endgeräts angezeigt wird, Detektieren des Vorgangs des Benutzers zum Aufrechterhalten des Zustands eines eingeschalteten Schirms auf der Anzeige durch das Endgerät.

8. Endgerät (101), umfassend eine Anzeige (130), einen Prozessor (110), einen Speicher (120) und einen Detektor (140), die mit dem Prozessor verbunden sind, wobei
der Speicher ein Computerprogramm vorspeichert; und
der Prozessor dazu konfiguriert ist, das in dem Speicher vorgespeicherte Computerprogramm zu Folgendem aufzurufen: Detektieren eines Vorgangs eines Benutzers durch den Detektor, der dazu dient, einen Zustand eines eingeschalteten Schirms der Anzeige aufrechtzuerhalten, während eine Anwendung auf der Anzeige des Endgeräts angezeigt wird, wobei der Vorgang umfasst, dass eine Menge von Schirmberührungsvorgängen, die nicht verwendet werden, um eine Aufgabe durchzuführen, eine voreingestellte Menge von Malen innerhalb einer voreingestellten Zeit erreicht, wenn sich die Anzeige in einem normalen Zustand eines eingeschalteten Schirms befindet, und basierend auf dem Detektieren, Anzeigen einer UI, die zum Anpassen der Dauer eines eingeschalteten Schirms der Anzeige verwendet wird, unter Verwendung der Anzeige, wobei die UI zu Folgendem konfiguriert ist: Bereitstellen einer Anpassungsart zum Anpassen der Dauer eines eingeschalteten Schirms der Anzeige und Empfangen von Anpassungsinformationen, die zum Anpassen der Dauer eines eingeschalteten Schirms verwendet werden, die vom Benutzer gemäß der Anpassungsart eingegeben wird, um die Dauer eines eingeschalteten Schirms zu verlängern, wenn die Anwendung angezeigt wird.

9. Endgerät nach Anspruch 8, wobei der Prozessor ferner zu Folgendem konfiguriert ist:
nachdem der Benutzer entsprechend der Anpassungsart die zum Anpassen der Dauer eines eingeschalteten Schirms verwendeten Anpassungsinformationen eingegeben hat, Anpassen der Dauer eines eingeschalteten Schirms der Anzeige entsprechend der Anpassungsinformationen.

10. Endgerät nach Anspruch 8 oder 9, wobei der Prozessor nach dem Anpassen der Dauer eines eingeschalteten Schirms der Anzeige zu Folgendem konfiguriert ist:
nachdem die Anzeige deaktiviert ist, Zurücksetzen der Dauer eines eingeschalteten Schirms auf die vor der Anpassung erlangte Dauer eines eingeschalteten Schirms.

11. Endgerät nach einem der Ansprüche 8 bis 10, wobei die Anpassungsart zum Anpassen der Dauer eines eingeschalteten Schirms des Endgeräts, die durch die UI bereitgestellt wird, eine oder eine Kombination von folgenden Arten umfasst:
eine Anpassungsart zum Verlängern der Dauer eines eingeschalteten Schirms, sodass die angepasste Dauer eines eingeschalteten Schirms gleich der Summe aus der Dauer eines eingeschalteten Schirms, die vor der Anpassung erlangt wird, und den Anpassungsinformationen ist, die durch den Benutzer zum Verlängern der Dauer des eingeschalteten Schirms eingegeben wird;
eine Anpassungsart der Dauer eines eingeschalteten Schirms, sodass die angepasste Dauer eines eingeschalteten Schirms gleich der durch den Benutzer eingegebenen Anpassungsinformationen für die Dauer eines eingeschalteten Schirms ist; oder
eine Anpassungsart zum Aufrechterhalten eines eingeschalteten Schirms, sodass das Endgerät den Zustand eines eingeschalteten Schirms aufrechterhält, bevor die Anzeige manuell deaktiviert wird.

12. Endgerät nach einem der Ansprüche 8 bis 11, wobei die Anpassungsart zum Anpassen der Dauer eines eingeschalteten Schirms des Endgeräts, die durch die UI bereitgestellt wird, in einer der folgenden Formen dargestellt wird:
die UI umfasst eine Zeitleiste, die eine Vielzahl von Zeitinformationen umfasst, die durch den Benutzer verwendet wird, um die Dauer eines eingeschalteten Schirms auszuwählen oder die Dauer des eingeschalteten Schirms zu verlängern;
die UI umfasst eine Vielzahl von Zeitinformationsoptionen, die durch den Benutzer verwendet wird, um die Dauer eines eingeschalteten Schirms auszuwählen oder die Dauer des eingeschalteten Schirms zu verlängern; oder
die UI umfasst ein Zeiteingabefeld, in das der Benutzer Informationen über die Dauer eines eingeschalteten Schirms oder Informationen über die Dauer, um die die Dauer des eingeschalteten Schirms verlängert werden soll, eingeben kann.

13. Endgerät nach Anspruch 8, wobei die UI ein Einstellbildschirm zum Einstellen der Dauer eines eingeschalteten Schirms in einem System ist.

## Revendications

1. Procédé de réglage de durée d'écran allumé d'un terminal, comprenant :
la détection (201), par un terminal, d'une opération d'un utilisateur qui agit pour maintenir un état d'écran allumé d'un affichage pendant qu'une application est affichée sur l'affichage du terminal, dans lequel l'opération comprend une quantité d'opérations tactiles d'écran qui ne sont pas utilisées pour réaliser une tâche atteint une quantité prédéfinie de fois dans un temps prédéfini lorsque l'affichage est dans un état d'écran allumé normal, et
sur la base de la détection, l'affichage (202), par le terminal sur l'affichage, d'une interface utilisateur UI utilisée pour régler la durée d'écran allumé du terminal, dans lequel l'UI est configurée pour : fournir un mode de réglage du réglage de la durée d'écran allumé du terminal, et recevoir des informations de réglage utilisées pour régler la durée d'écran allumé qui est entrée par l'utilisateur selon le mode de réglage, pour prolonger la durée d'écran allumé lorsque l'application est affichée.

2. Procédé selon la revendication 1, dans lequel après l'affichage, par le terminal sur l'affichage, d'une UI utilisée pour régler la durée d'écran allumé du terminal, le procédé comprend également :
le réglage, par le terminal, de la durée d'écran allumé du terminal selon les informations de réglage utilisées pour régler la durée d'écran allumé qui sont entrées par l'utilisateur sur l'UI affichée selon le mode de réglage.

3. Procédé selon la revendication 1 ou 2, dans lequel après le réglage de la durée d'écran allumé du terminal, le procédé comprend également :
après la désactivation de l'affichage, la restauration, par le terminal, de la durée d'écran allumé du terminal à la durée d'écran allumé obtenue avant le réglage.

4. Procédé selon l'une quelconque des revendications 1 à 3, dans lequel le mode de réglage du réglage de la durée d'écran allumé du terminal qui est fourni par l'UI comprend l'un ou une combinaison des modes suivants :
un mode de réglage de prolongation de la durée d'écran allumé, de sorte qu'une durée d'écran allumé réglée est égale à une somme de la durée d'écran allumé obtenue avant le réglage et des informations de réglage entrées par l'utilisateur pour prolonger la durée d'écran allumé ;
un mode de réglage de la durée d'écran allumé, de sorte qu'une durée d'écran allumé réglée est égale à des informations de réglage qui sont celles de la durée d'écran allumé entrées par l'utilisateur ; ou
un mode de réglage de maintien d'un état d'écran allumé, de sorte que le terminal maintient un état d'écran allumé avant que l'affichage ne soit désactivé manuellement.

5. Procédé selon l'une quelconque des revendications 1 à 4, dans lequel le mode de réglage du réglage de la durée d'écran allumé du terminal qui est fourni par l'UI se présente sous l'une des formes suivantes :
l'UI comprend une chronologie, comprenant une pluralité d'éléments d'informations temporelles utilisés par l'utilisateur pour sélectionner une durée d'écran allumé ou prolonger la durée d'écran allumé ;
l'UI comprend une pluralité d'options d'informations temporelles qui sont utilisées par l'utilisateur pour sélectionner une durée d'écran allumé ou prolonger la durée d'écran allumé ; ou
l'UI comprend une zone d'entrée de temps qui est utilisée par l'utilisateur pour entrer des informations de durée d'écran allumé ou des informations de durée durant laquelle la durée d'écran allumé doit être prolongée.

6. Procédé selon la revendication 1, dans lequel l'UI est un écran de définition pour définir la durée d'écran allumé dans un système.

7. Procédé selon l'une quelconque des revendications 1 à 6, dans lequel la détection, par le terminal, d'une opération d'un utilisateur pour maintenir un état d'écran allumé d'un affichage comprend :
lorsqu'une application est affichée sur l'affichage du terminal, la détection, par le terminal, de l'opération de l'utilisateur pour maintenir un état d'écran allumé de l'affichage.

8. Terminal (101) comprenant un affichage (130), un processeur (110), et une mémoire (120) et un détecteur (140) qui sont connectés au processeur, dans lequel
la mémoire pré-stocke un programme informatique ; et
le processeur est configuré pour invoquer le programme informatique pré-stocké dans la mémoire pour : détecter, par le détecteur, une opération d'un utilisateur qui agit pour maintenir un état d'écran allumé de l'affichage pendant qu'une application est affichée sur l'affichage du terminal, dans lequel l'opération comprend une quantité d'opérations tactiles sur l'écran qui ne sont pas utilisées pour réaliser une tâche atteint une quantité prédéfinie de fois dans un temps prédéfini lorsque l'affichage est dans un état d'écran allumé normal, et sur la base de la détection, afficher, en utilisant l'affichage, une interface utilisateur UI utilisée pour régler une durée d'écran allumé de l'affichage, dans lequel l'UI est configurée pour : fournir un mode de réglage de la durée d'écran allumé de l'affichage, et recevoir des informations de réglage utilisées pour régler la durée d'écran allumé qui sont entrées par l'utilisateur selon le mode de réglage, pour prolonger la durée d'écran allumé lorsque l'application est affichée.

9. Terminal selon la revendication 8, dans lequel le processeur est également configuré pour :
après que l'utilisateur entre, selon le mode de réglage, les informations de réglage utilisées pour régler la durée d'écran allumé, régler la durée d'écran allumé de l'affichage selon les informations de réglage.

10. Terminal selon la revendication 8 ou 9, dans lequel après le réglage de la durée d'écran allumé de l'affichage, le processeur est également configuré pour :
une fois l'affichage désactivé, restaurer la durée d'écran allumé de l'affichage à une durée d'écran allumé obtenue avant le réglage.

11. Terminal selon l'une quelconque des revendications 8 à 10, dans lequel le mode de réglage du réglage de la durée d'écran allumé du terminal qui est fourni par l'UI comprend l'un ou une combinaison des modes suivants :
un mode de réglage de prolongation de la durée d'écran allumé, de sorte qu'une durée d'écran allumé réglée est égale à une somme de la durée d'écran allumé obtenue avant le réglage et des informations de réglage entrées par l'utilisateur pour prolonger la durée d'écran allumé ;
un mode de réglage de la durée d'écran allumé, de sorte qu'une durée d'écran allumé réglée est égale à des informations de réglage qui sont celles de la durée d'écran allumé et qui sont entrées par l'utilisateur ; ou
un mode de réglage de maintien d'un état d'écran allumé, de sorte que le terminal maintient un état d'écran allumé avant que l'affichage ne soit désactivé manuellement.

12. Terminal selon l'une quelconque des revendications 8 à 11, dans lequel le mode de réglage du réglage de la durée d'écran allumé du terminal qui est fourni par l'UI se présente sous l'une des formes suivantes :
l'UI comprend une chronologie, comprenant une pluralité d'éléments d'informations temporelles utilisés par l'utilisateur pour sélectionner une durée d'écran allumé ou prolonger la durée d'écran allumé ;
l'UI comprend une pluralité d'options d'informations temporelles qui sont utilisées par l'utilisateur pour sélectionner une durée d'écran allumé ou prolonger la durée d'écran allumé ; ou
l'UI comprend une zone d'entrée de temps qui est utilisée par l'utilisateur pour entrer des informations de durée d'écran allumé ou des informations de durée durant laquelle la durée d'écran allumé doit être prolongée.

13. Terminal selon la revendication 8, dans lequel l'UI est un écran de définition pour définir la durée d'écran allumé dans un système.
